# EUROPEAN PATENT SPECIFICATION

(11) **EP 2 834 383 B1**
(45) Date of publication and mention of the grant of the patent: **21.07.2021**
(21) Application number: 13715142.9
(22) Date of filing: 05.04.2013
(51) Int. Cl.: C22C 38/00, C22C 38/02, C22C 38/04, C22C 38/06, C22C 38/22, C22C 38/24, C22C 38/26, C22C 38/32, C22C 38/44, C22C 38/46, C22C 38/48, C22C 38/50, C22C 38/54, C22C 38/58, C21D 8/02, C21D 9/46, C23C 2/06, B32B 15/01

(54) **STEEL STRIP HAVING A LOW SI CONTENT**
STAHLSTREIFEN MIT NIEDRIGEM SI-GEHALT
BANDE D'ACIER AYANT UNE FAIBLE TENEUR EN SI

(30) Priority: 05.04.2012 EP 12002492
(43) Date of publication of application: 11.02.2015
(73) Proprietor: Tata Steel IJmuiden B.V., NL-1951 JZ VELSEN-NOORD (NL)
(72) Inventor: JANSEN, Egbert, NL-1970 CA IJmuiden (NL); SPAN, Edward Anton Frederik, NL-1970 CA IJmuiden (NL); MOSTERT, Richard, NL-1970 CA IJmuiden (NL); KOP, Theo Arnold, NL-1970 CA IJmuiden (NL)
(74) Representative: Group Intellectual Property Services
(86) International application number: PCT/EP2013/001017
(87) International publication number: WO 2013/149734

(56) References cited:
- EP-A1- 1 193 322
- EP-A1- 1 195 447
- EP-A1- 1 995 339
- EP-A1- 2 169 091
- EP-A1- 2 169 091
- EP-A1- 2 434 027
- EP-A1- 2 434 027
- EP-A1- 2 447 390
- EP-A1- 2 447 390
- WO-A1-2008/102009
- WO-A1-2011/055844
- WO-A1-2011/152017
- JP-A- H11 293 396
- JP-A- 2007 092 126
- JP-A- 2011 219 812

## Description

The invention relates to a steel strip having a low silicon content, in particular a hot dip galvanised steel strip, more particularly a hot dip galvanised dual phase or complex phase steel strip.

Dual phase (DP) steel strip having balanced properties regarding strength and ductility (formability) is well known in the art. In cold rolled DP steel strip silicon is a very common alloying element for reason of cost reduction and/or control, solid solution strengthening, avoiding carbide precipitation, which is favourable in view of ductility (elongation). However, Si induces surface-related problems.

Si oxides formed during processing in the hot strip mill and annealing line increase the risk of the occurrence of so-called "tiger stripes", which affect appearance and coatability. Therefore, commonly the use of silicon in DP steel is restricted, especially in hot dip galvanized (HDG) DP steel. Typically Si content in DP steel is 0.2-0.3 wt.% in HDG DP sheet and 0.2-0.5 wt.% in uncoated steel sheet.

From EP 2169091 A1 a high-strength hot-dip galvanized steel sheet with low yield strength is known. The steel composition comprises, in mass percent, 0.01-0.12%C, 0.2% or less Si, less than 2% Mn, 0.04% or less P, 0.02% or less S, 0.3% or less sol. Al, 0.01% or less N, 0.3-2% Cr, also satisfying the condition 2.1 ≤ [Mneq] ≤3 and 0.24 ≤ [%Cr]/[%Mn], the balance being iron and inevitable impurities. The steel microstructure is composed of ferrite and a second phase, wherein the area ratio of the second phase is 2-25%, the area ratio of pearlite or bainite in the second phase is 0-20%, the average grain diameter of the second phase is 0.9-7 micrometer, and the area ratio of grains with a grain diameter of less than 0.8 micrometer in the second phase is less than 15%. The steel composition is exemplified by a number of examples based on a low Si and low Al alloying philosophy.

EP2434027A1 discloses a steel material for high heat input welding. The steel material has a composition which contains (in mass%) 0.03 to 0.08% C, 0.01 to 0.15% Si, 1.8 to 2.6% Mn, 0.012% or less P, 0.0005 to 0.0040% S, 0.005 to 0.1% Al, 0.003 to 0.03% Nb, 0.003 to 0.03% Ti, 0.0025 to 0.0070% N and 0.0003 to 0.0025% B, wherein a carbon equivalent Ceq falls within a range of 0.33 to 0.45.

WO2008/102009A1 discloses a cold rolled and continuously annealed high strength steel strip comprising (in wt%): 0.04-0.30 % C, 1.0-3.5 % Mn, 0-1.0 % Si, 0-2.0 % Al, 0-1.0 % Cr, 0-0.02 % P, 0-0.01 % S, 0-0.25 % V, 0-0.1 % Nb, 0-0.20 % Ti, 0-0.015 % N, 0-0.010 % B and unavoidable impurities, the balance being iron. The strip is provided with a hot dip galvanized or galvannealed zinc alloy coating layer, wherein the zinc alloy consists of 0.3 - 4.0 % Mg and 0.05 - 6.0 % Al; optionally at most 0.2 % of one or more additional elements; unavoidable impurities; the remainder being zinc.

EP2447390A1, which is prior art under Art. 54(3) EPC, discloses a high-strength galvanized steel sheet that contains (in wt%) more than 0.015% to less than 0.10% of C, 0.5% or less of Si, 1.0% to 1.9% of Mn, 0.015% to 0.050% of P, 0.03% or less of S, 0.01 % to 0.5% of sol. Al, 0.005% or less of N, less than 0.40% of Cr, 0.005% or less of B, less than 0.15% of Mo, 0.4% or less of V, and less than 0.020% of Ti, wherein the composition further satisfies the conditions 2.2:5[Mneq1<3.1, [%Mn]+3.3[%Mo]≤1.9 and [%Mn]+3.3[%Mo])/(1.3[%Cr]+8[%P]+ 150B*)<3.5.

JP2007092126 discloses a thin steel sheet having a composition (in wt%), comprising C: 0.05 to 0.15%, Si: 0.3% or less, Mn: 1.5 to 2.5%, P: 0.05% or less, S: 0.01% or less, Al: 1.0% or less, N: 0.01% or less, Nb: 0.02 to 0.1%, wherein the balance is composed of Fe and inevitable impurities, and the contents of C, N, Nb satisfies the formula Nb-(92.9/14) * N ≥ 0.02 (1) C- (12/92.9) * Nb-1 ≥ 0.01 (2) where Nb-1 = Nb- (92.9/14) * N. The steel sheet has a microstructure that comprise a ferrite phase of, by area, 60 to 90% and a martensite phase of 10 to 40%, wherein the total area ratio of the ferrite phase and the martensite phase is ≥95. The sheet has a tensile strength of 590 MPa or more

WO2011/152017A1 discloses a steel sheet, comprising by mass%: C: equal to or more than 0.05% and less than 0.12%; P: 0.001 to 0.040%; and S: equal to or less than 0.0050%, wherein a steel sheet surface layer, constituting a portion of the steel sheet up to a depth of 10 µm measured from each surface of the steel sheet, has a structure containing more than 70% of ferrite phase by volume fraction, and a steel sheet inner layer portion, on the inner side from the depth of 10 µm measured from each surface, has a structure containing 20 to 70% by volume fraction of ferrite phase with an average crystal grain size equal to or smaller than 5 µm. The steel sheet has a tensile strength equal to or larger than 980 MPa, and the steel sheet has a galvanized layer on a surface thereof.

JP2011219812A discloses a steel sheet that can be manufactured without coiling at room temperature after hot rolling. The composition comprises, in wt%, C: 0.05-0.15%, Si: 0.1% or less, Mn: 1.4-2.5%, Al: 1.2% or less, Ti: 0.02-0.06%, Cr: 0.2 to 0.8%, P: 0.05% or less S: 0.005% or less, N: 0.01% or less, the balance being Fe and inevitable impurities The tensile strength is 780 MPa or more. The microstructure comprises ferrite, bainite with an area ratio of 60% or more, and a martensite phase of 10% or less.

JPH 11293396 discloses a hot dip galvanized steel sheet that is produced by using, as a substrate, a cold rolled steel sheet having a composition containing, by weight, 0.06-0.18% C, ≤1.5% Si, 1.4-2.3% Mn, 0.2-0.6% Cr, ≤0.05% P, 0.010-0.100% sol. Al, ≤0.01% S, and ≤0.01% N, and the steel-sheet structure consists of ≥5% by area ratio, in total, of martensitic phase, bainitic phase, and retained austenite phase and the balance ferritic phase and pearlitic phase.

It is an object of the present invention to provide a steel composition, such as a dual phase (DP) or complex phase (CP) steel composition, which combines desired microstructure properties regarding strength and ductility with sufficient surface quality, in particular avoiding the occurrence of tiger stripes.

It is another object of the invention to provide such a steel composition having a good coatability.

According to the invention a steel strip having an ultimate tensile strength Rm in the 600MPa steel category is provided, which has a composition and microstructure as defined in claim 1.

Surprisingly it has been found that the steel composition according to the invention does not show tiger stripes at an acceptable level of strength and formability properties comparable to traditional (HDG) DP steel strip at the 600 MPa level.

Regarding the metallurgical aspects the following guidelines are deemed to apply:
C is 0.08-0.11%, in view of spot weldability. If C is below 0.08%, then the carbon content is too low to create DP or CP microstructures..
Si is at most 0.1%. Si has shown to be the major factor responsible for tiger stripes. In order to avoid the risk of the occurrence of these surface defects in a secure way, the amount is limited to a maximum of 0.1%. Preferably the Si content is in the range of 0.02-0.08%.

Usually the addition of Al and Si has a similar beneficial effect on the formability of steels. However, in view of tiger stripes Al has a negligible effect. Therefore Al is in the range of 0.01-1.50%, such as 0.01-1.10%. Preferably, the minimum amount of Al is more than 0.1%, more preferably more than about 0.2%, and Al content is advantageously less than 0.5%, such as about 0.3%. Mn is present at a level of 1.70-2.20%, preferably 1.70-1.95 thereby compensating the reduction of strength caused by the low Si content. Cr, Mo and Ni are also present for strength and hardening reasons determining the DP or CP microstructure of the steel strip of the invention. According to the invention the total sum of these elements is at least 0.5%. The amounts of the individual elements are
Cr 0.40-0.70%, preferably 0.5-0.6%;
Mo at most 0.3%, preferably less than 0.01%; and
Ni 0-1.0%, preferably 0-0.05%.

The steel strip composition may optionally comprise other alloying elements in small amounts. The sum of inevitable impurities and other alloying elements is advantageously less than 1,25%. The upper limits of the additional alloying elements and individual impurities are

| | |
|---|---|
| P | optionally more than 0.005% and at most 0.05% |
| N | at most 0.015% |
| Nb | at most 0.005% |
| Ti | at most 0.1% |
| V | at most 0.1% |
| B | at most 0.01%. |

The steel strip according to the invention has a microstructure consisting of martensite 2-50%, preferably at least 5%; ferrite 50-98%; and pearlite less than 3%, preferably about 0%. Advantageously the grain size is about 30 micrometer or less.

In a preferred embodiment the steel strip is coated with a coating comprising Zn. Although the coating can be applied in various ways, hot dip galvanising is preferred using a standard GI coating bath. Other Zn coatings may also be applied. An example comprises a Zn alloy coating according to WO 2008102009, in particular a zinc alloy coating layer consisting of 0.3 - 4.0 %Mg and 0.05% - 6.0 % Al and optionally at most 0.2 % of one or more additional elements along with unavoidable impurities and the remainder being zinc. An additional element typically added in a small amount of less than 0.2 weight %, could be selected from the group comprising Pb or Sb, Ti, Ca, Mn, Sn, La, Ce, Cr, Ni, Zr or Bi. Pb, Sn, Bi and Sb are usually added to form spangles. Preferably, the total amount of additional elements in the zinc alloy is at most 0.2%. These small amounts of an additional element do not alter the properties of the coating nor the bath to any significant extent for the usual applications. Preferably, when one or more additional elements are present in the zinc alloy coating, each is present in an amount < 0.02 weight %, preferably each is present in an amount < 0.01 weight %. Additional elements are usually only added to prevent dross forming in the bath with molten zinc alloy for the hot dip galvanising, or to form spangles in the coating layer.

The invention will be further illustrated by means of the following examples:

### Examples 1-4

Sheets having a composition as indicated in Table 1 were manufactured by a usual cold rolling and continuous annealing process. After hot rolling the strip was cold rolled to a final thickness of listed in Table 2. For Examples 1-2 cold rolled strip is made via standard steel making and rolling routes. After cold rolling the material is continuously annealed in standard annealing lines. The relevant data for examples 1 and 2 are presented in Table 3. After heating to a temperature T1, slow cooling (rate 1-10°C/s) to T2 is carried out and subsequently a rapid cooling (rate 20-60°C/s) to temperature T3. Next, the material is galvanized. Examples 3-4 were prepared in a similar manner.

The sheets were also visually examined for the presence of tiger stripes. Tiger stripes were not observed. Surface quality is nearly full-finish. Also a good coatability was achieved.

**Table 1. Composition examples 1-4**

| **Example** | **C** | **Mn** | **P** | **S** | **Si** | **N** | **Al** | **Nb** | **B** | **Ti** | **V** | **Cr** | **Mo** | **Ni** | Σ **Cr +Mo + Ni** |
|---|---|---|---|---|---|---|---|---|---|---|---|---|---|---|---|
| | | | | | | | | | | | | | | | |
| **1** | 0.103 | 1.788 | 0.010 | 0.004 | 0.020 | 0.0025 | 0.030 | 0.001 | 0.000 | 0.002 | 0.004 | 0.543 | 0.000 | 0.020 | 0.563 |
| **2** | 0.091 | 1.804 | 0.009 | 0.002 | 0.055 | 0.0046 | 0.290 | 0.001 | 0.002 | 0.004 | 0.004 | 0.574 | 0.000 | 0.026 | 0.600 |
| **3** (not claimed) | 0.090 | 1.807 | 0.011 | 0.002 | 0.071 | 0.049 | 0.283 | 0.001 | 0.002 | 0.005 | 0.005 | 0.574 | 0.006 | 0.026 | 0.606 |
| **4** (not claimed) | 0.092 | 1.810 | 0.008 | 0.002 | 0.049 | 0.043 | 0.305 | 0.001 | 0.001 | 0.004 | 0.004 | 0.573 | 0.007 | 0.026 | 0.606 |

**Table 2. Physical properties examples 1-4**

| **Example** | **Thickness** | **Rp (MPa)** | **Rm (MPa)** | **A80 (%)** | **Au (%)** | **r** | **n** | **Rm*A80** | **Rp/Rm** |
|---|---|---|---|---|---|---|---|---|---|
| | | | | | | | | | |
| **1** | 1,432 | 390 | 628 | 22.3 | 13.8 | 0.769 | 0.137 | 14015 | 0.62 |
| **2** | 1.377 | 374 | 602 | 25.0 | 16.0 | 0.969 | 0.154 | 15077 | 0.62 |
| **3** (not claimed) | 1,021 | 345 | 645 | 23.0 | 16.0 | 0,912 | 0,159 | 14835 | 0,53 |
| **4** (not claimed) | 0,784 | 336 | 615 | 24,5 | 17.0 | 0,731 | 0,170 | 15068 | 0,55 |

**Table 3. Annealing data examples 1-2**

| **Example** | **T1 (°C)** | **T2 (°C)** | **T3 (°C)** |
|---|---|---|---|
| **1** | 788 | 678 | 464 |
| **2** | 785 | 680 | 410 |

## Claims

1. Steel strip having an ultimate tensile strength Rm in the 600MPa steel category consisting of, in mass percent, the following elements:
| | |
|---|---|
| C | 0.08-0.11 %; |
| Mn | 1.70-2.20%; |
| Si | at most 0.1 %; |
| Cr | 0.40-0.70%; |
| Mo | at most 0.3%; |
| Ni | at most 1.0%, |
| Al | 0.01-1.50%; |
| Nb | at most 0.005%; |
| P | optionally more than 0.005% and at most 0.05%; |
| N | equal to or less than 0.015%; |
| Ti | equal to or less than 0.1%; |
| V | equal to or less than 0.1%; |
| B | equal to or less than 0.01% |
wherein the sum of Cr, Mo and Ni is at least 0.5%;
the balance being Fe and inevitable impurities;
and having a microstructure consisting of:
martensite 2-50%;
ferrite 50-98%;
and pearlite 0% or less than 3%.

2. Steel strip according to claim 1, wherein Si is at most 0.08%.

3. Steel strip according to claim 1 or claim 2, comprising
| | |
|---|---|
| Mn | 1.70-1.95%; |
| Si | 0.02-0.08%; |
| Al | 0.1-0.5%. |

4. Steel strip according to any one of the preceding claims, comprising
| | |
|---|---|
| Cr | 0.50-0.60%; |
| Mo | at most 0.01%; |
| Ni | at most 0.05%. |

5. Steel strip according to one of the preceding claims, wherein Al is at least 0.2%.

6. Steel strip according to any one of the preceding claims having a microstructure comprising
at least 5% martensite ;
and about 0% pearlite.

7. Steel strip according to any one of the preceding claims, wherein the grain size is about 30 micrometer or less.

8. Steel strip according to any one of the preceding claims, coated with a coating comprising Zn.

9. Steel strip according to claim 8 being hot dip galvanised.

10. Steel strip according to claim 8 or claim 9, wherein the coating comprises, in mass percent: 0.3-4.0 % Mg and 0.05-6.0 % Al and optionally at most 0.2% of one or more additional elements along with unavoidable impurities and the remainder being zinc.

## Patentansprüche

1. Stahlband mit einer Zugfestigkeit Rm in der 600-MPa-Stahlkategorie, das, in Massenprozent, aus den folgenden Elementen besteht:
| | |
|---|---|
| C | 0,08-0,11 %; |
| Mn | 1,70-2,20 %; |
| Si | höchstens 0,1 %; |
| Cr | 0,40-0,70 %; |
| Mo | höchstens 0,3 %; |
| Ni | höchstens 1,0 %, |
| Al | 0,01-1,50 %; |
| Nb | höchstens 0,005 %; |
| P | gegebenenfalls mehr als 0,005 % und höchstens 0,05 %; |
| N | gleich oder weniger als 0,015 %; |
| Ti | gleich oder weniger als 0,1 %; |
| V | gleich oder weniger als 0,1 %; |
| B | gleich oder weniger als 0,01 %; |
wobei die Summe aus Cr, Mo und Ni mindestens 0,5 % beträgt;
es sich bei dem Rest um Fe und unvermeidbare Verunreinigungen handelt;
und mit einem Gefüge, bestehend aus:
Martensit 2-50%;
Ferrit 50-98 %;
und Perlit 0 % oder weniger als 3 %.

2. Stahlband nach Anspruch 1, wobei Si höchstens 0,08 % ausmacht.

3. Stahlband nach Anspruch 1 oder Anspruch 2, umfassend
| | |
|---|---|
| Mn | 1,70-1,95 %; |
| Si | 0,02-0,08 %; |
| Al | 0,1-0,5 %. |

4. Stahlband nach einem der vorhergehenden Ansprüche, umfassend
| | |
|---|---|
| Cr | 0,50-0,60 %; |
| Mo | höchstens 0,01 %; |
| Ni | höchstens 0,05 %. |

5. Stahlband nach einem der vorhergehenden Ansprüche, wobei Al mindestens 0,2 % ausmacht.

6. Stahlband nach einem der vorhergehenden Ansprüche mit einem Gefüge, das
mindestens 5 % Martensit;
und etwa 0 % Perlit
umfasst.

7. Stahlband nach einem der vorhergehenden Ansprüche, wobei die Korngröße etwa 30 Mikrometer oder weniger beträgt.

8. Stahlband nach einem der vorhergehenden Ansprüche, beschichtet mit einer Zn umfassenden Beschichtung.

9. Stahlband nach Anspruch 8, das feuerverzinkt ist.

10. Stahlband nach Anspruch 8 oder Anspruch 9, wobei die Beschichtung, in Massenprozent, Folgendes umfasst: 0,3-4,0 % Mg und 0,05-6,0 % Al und gegebenenfalls höchstens 0,2 % von einem oder mehreren zusätzlichen Elementen zusammen mit unvermeidbaren Verunreinigungen und wobei es sich bei dem Rest um Zink handelt.

## Revendications

1. Bande d'acier possédant une résistance à la traction ultime Rm le classant dans la catégorie d'aciers de 600 MPa constituée, en pour cent en masse, des éléments suivants :
| | |
|---|---|
| C | 0,08 à 0,11 % ; |
| Mn | 1,70 à 2,20 % ; |
| Si | au plus 0,1 % ; |
| Cr | 0,40 à 0,70 % ; |
| Mo | au plus 0,3 % ; |
| Ni | au plus 1,0 % ; |
| Al | 0,01 à 1,50 % ; |
| Nb | au plus 0,005 % ; |
| P | éventuellement plus de 0,005 % et au plus 0,05 % ; |
| N | égal ou inférieur à 0,015 % ; |
| Ti | égal ou inférieur à 0,1 % ; |
| V | égal ou inférieur à 0,1 % ; |
| B | égal ou inférieur à 0,01 % |
la somme de Cr, Mo et Ni étant d'au moins 0,5 % ;
le reste étant Fe et des impuretés inévitables ;
et possédant une microstructure constituée de :
martensite 2 à 50 % ;
ferrite 50 à 98 % ;
et perlite 0 % ou moins de 3 %.

2. Bande d'acier selon la revendication 1, Si étant d'au plus 0,08 %.

3. Bande d'acier selon la revendication 1 ou la revendication 2, comprenant
| | |
|---|---|
| Mn | 1,70 à 1,95 % ; |
| Si | 0,02 à 0,08 % ; |
| Al | 0,1 à 0,5 %. |

4. Bande d'acier selon l'une quelconque des revendications précédentes, comprenant
| | |
|---|---|
| Cr | 0,50 à 0,60 % ; |
| Mo | au plus 0,01 % ; |
| Ni | au plus 0,05 %. |

5. Bande d'acier selon l'une des revendications précédentes, Al étant d'au moins 0,2 %.

6. Bande d'acier selon l'une quelconque des revendications précédentes possédant une microstructure comprenant
au moins 5 % de martensite ;
et environ 0 % de perlite.

7. Bande d'acier selon l'une quelconque des revendications précédentes, la taille de grain étant d'environ 30 micromètres ou moins.

8. Bande d'acier selon l'une quelconque des revendications précédentes, revêtue avec un revêtement comprenant du Zn.

9. Bande d'acier selon la revendication 8 qui est galvanisée à chaud.

10. Bande d'acier selon la revendication 8 ou la revendication 9, le revêtement comprenant, en pour cent en masse : 0,3 à 4,0 % de Mg et 0,05 à 6,0 % d'Al et éventuellement au plus 0,2 % d'un ou plusieurs éléments supplémentaires ainsi que des impuretés inévitables et le reste étant du zinc.
